# EUROPÄISCHE PATENTSCHRIFT

(11) **EP 0 635 109 B1**
(45) Veröffentlichungstag und Bekanntmachung des Hinweises auf die Patenterteilung: **06.08.1997**
(21) Anmeldenummer: 93908864.7
(22) Anmeldetag: 31.03.1993
(51) Int. Cl.: F16L 37/38, F16L 37/12, F16L 37/18

(54) **GASFLASCHENFÜLL-SCHNELLANSCHLUSS**
QUICK-CONNECT FITTING FOR GAS CYLINDERS
RACCORD RAPIDE POUR LE REMPLISSAGE DE BOUTEILLES DE GAZ

(30) Priorität: 31.03.1992 DE 9204384 U
(43) Veröffentlichungstag der Anmeldung: 25.01.1995
(73) Patentinhaber: WEH GmbH, VERBINDUNGSTECHNIK, D-89257 Illertissen (DE)
(72) Erfinder: WEH, Wolfgang, D-89257 Illertissen (DE); WEH, Erwin, D-89257 Illertissen (DE)
(74) Vertreter: Fiener, Josef
(86) Internationale Anmeldenummer: EP9300783
(87) Internationale Veröffentlichungsnummer: WO9320378

(56) Entgegenhaltungen:
- EP-A- 0 039 977
- EP-A- 0 202 592
- DE-C- 957 929
- GB-A- 813 378
- US-A- 2 536 428
- US-A- 2 675 829
- US-A- 3 474 827

## Beschreibung

Die Erfindung betrifft einen Schnellanschluß für die Übertragung von gasförmigen und/oder flüssigen Medien, insbesondere zum Füllen von Gasflaschen, gemäß den oberbegrifflichen Merkmalen des Patentanspruches 1.

Mit derartigen Schnellanschlüssen gemäß EP-A-0 202 592 soll eine einfach zu bewerkstelligende sichere, dichte und zuverlässige sowie schnell anschließbare Kupplung zum Übertragen eines gasförmigen und/oder flüssigen Mediums von einer Quelle derselben in einen anderen Bereich verfügbar gemacht werden. Im Vordergrund steht dabei eine einfache und zuverlässige Handhabung des Schnellanschlusses, der auch bei ungünstigen, beispielsweise aggressiven Medien und/oder bei hohen Mediendrücken, sowie in einem weiten Temperaturbereich, problemlos bedient werden kann.

Ein ähnlicher Schnellanschluß ist auch in der europäischen Patentanmeldung 0 340 879 Al offenbart. Dieser Schnellanschluß weist ein Gehäuse mit einem Medieneinlaß und einem Medienauslaß auf, wobei im Einlaßbereich und im Auslaßbereich jeweils Ventile angeordnet sind. Diese Ventile und im Gehäuse vorgesehene Spannzangen werden nach dem Ansetzen des Schnellanschlusses in einer bestimmten Reihenfolge betätigt, bei der zuerst durch das Ansetzen des Schnellanschlusses an einen Stutzen das Auslaßventil geöffnet, dann bei weiterer Bewegung des Steuerhebels die Spannzangen geschlossen und schließlich das Einlaßventil geöffnet wird. Der Steuerhebel steht dabei direkt mit einer Schiebehülse für die Beaufschlagung der Spannzangen und mit einem zentralen Steuerventil-Hohlkolben in Eingriff, der mit einem gehäusefesten Sitz das Einlaßventil bildet und bei Abheben von diesem Sitz den Medieneinlaß freigibt.

Der Aufbau dieser vorbekannten Schnellanschlüsse ist außerordentlich vielteilig und komplex, sowie voluminös und daher schlecht handhabbar.

Der Erfindung liegt die Aufgabe zugrunde, einen Schnellanschluß der eingangs genannten Art verfügbar zu machen, der mit einem teilarmen Aufbau einen sicheren und zuverlässigen abgedichteten Anschluß bei einfacher Handhabung und Kompaktem Aufbau ermöglicht.

Diese Aufgabe wird gelöst durch einen Schnellanschluß gemäß Patentanspruch 1. Bevorzugte weitere Ausgestaltungen der Erfindung sind in den nachgeordneten Ansprüchen genannt.

Der erfindungsgemäße Schnellanschlusses zeichnet sich durch eine außerordentlich geringe Teilezahl, niedrigen Herstellungskosten sowie einer außerordentlich einfachen Handhabung aus, die gleichzeitig höchsten Sicherheitsanforderungen gerecht wird.

Die Umformung der Schwenkbewegung des Schwenkorgans in eine Verschiebebewegung der Schiebehülse ist besonders günstig und mit ausgewogenen Kraftübertragungsverhältnissen möglich, wenn das Schwenkorgan, insbesondere der Schwenkbügel, beiderseits der Gehäuselängsachse gelagert ist und eine exzentrisch gelagerte Steuerscheibe aufweist, die zur Bewegungsübertragung an die Schiebehülse angreift. Dieser Angriff an die Schiebehülse kann an einem angeformten oder einem eingeformten Schiebehülsenabschnitt erfolgen. Bevorzugt greift die Steuerscheibe in eine Ausnehmung der Schiebehülse ein und erreicht damit eine besonders kompakte Gestaltung für die Steuerung der Bewegungsübertragung.

Das von den Spannzangen zur Kupplung vorgesehene Eingriffsprofil kann aus einem Innengewinde, einem Außengewinde, Wülsten, Nuten und anderen Gestaltungsformen bestehen, die einen formschlüssigen Profileingriff ermöglichen. Das Spannzangenprofil ist dabei komplementär zu einem externen Eingriffsprofil gestaltet, beispielsweise einem Stutzen oder einem Gasflaschenventilanschlußgewinde.

Die konstruktive Konzeption des erfindungsgemäßen Schnellanschlusses wird besonders dadurch vereinfacht, daß die Schiebehülse unmittelbar mit dem Dichtkolben in Verbindung steht. Hierdurch reicht es in vorteilhafter Weise für die Betätigung des Schnellanschlusses aus, wenn nur die Schiebehülse selbst relativ zu dem Gehäuse bewegt wird, ohne daß ein direkter Angriff der Betätigungseinrichtung an dem Dichtkolben nötig wird.
Die Schiebehülse ist bevorzugt mit dem Dichtkolben relativ bewegbar verbunden, um in günstiger Weise für den Dichtkolben eine für die Herstellung optimaler Dichtungsverhältnisse vorteilhafte Relativbewegung zu ermöglichen. Nach einer bevorzugten Ausgestaltung ist als Verbindung zwischen der Schiebehülse und dem Dichtkolben wenigstens ein Bolzen vorgesehen, der die Vorzüge einer besonders einfachen Montage mit den Vorzügen einer konstruktiv außerordentlich einfachen und wirkungsvollen Lösung aufweist.

Zur Realisierung der relativ bewegbaren Verbindung zwischen Schiebehülse und Dichtkolben ist nach einer bevorzugten weiteren Ausgestaltung der Erfindung vorgesehen, daß jeder Bolzen an dem Dichtkolben in eine in Kolbenbewegungsrichtung orientierte Nut eintritt, wobei bevorzugt jeder Bolzen das Gehäuse in einem in der Bewegungsrichtung der Schiebehülse orientiertem Langloch durchtritt. Der Dichtkolben selbst ist dabei vorzugsweise in Richtung des Auslasses vorgespannt, wodurch optimale Dichtverhältnisse im Anschlußbereich durch einen zusätzlichen Anlagedruck verwirklicht werden können.

Nach der Erfindung weist die Betätigungseinrichtung ein am Gehäuse gelagertes Schwenkorgan auf, das bevorzugt als Schwenkhebel ausgebildet ist und vorzugsweise die Form eines Bügels aufweist, der über den Bereich des Auslasses schwenkbar ist. Hierdurch ergeben sich beispielsweise für den Anschluß an Gasflaschenventile einfache Handhabungsmöglichkeiten, da der Bügel von beiden Seiten handhabbar ist. Bei entsprechender Gestaltung der Bügetgröße ermöglicht diese Konzeption zudem die Verwirklichung eines weiteren Sicherheitsmerkmals insoweit als ein hinter den Anschlußbereich, insbesondere über das Gasflaschenventil hinweg, verschwenkter Bügel stets die Zuordnung zwischen Schnellanschluß und Anschlußstutzen gewährleistet. Der Bügel muß dabei nicht unbedingt geschlossen ausgebildet sein, sondern kann auch nur ähnlich einem abgekröpften Schwenkhebel den Bereich des Auslasses, insbesondere ein Gasflaschenventil nach dem Verschwenken hintergreifen.

Nach einer konstruktiv und funktionell günstigen Ausgestaltung der Erfindung ist der Schwenkbügel an dem Gehäuse im Bereich der Gehäuselängsachse gelagert und aus einer Öffnungsstellung, die etwa senkrecht zur Gehäuselängsachse orientiert ist, in eine Schließstellung jenseits einer Ebene schwenkbar, in der die Gehäuselängsachse und die Schwenkachse liegen.

Die Steuerscheibe besitzt vorzugsweise eine exzentrische Schwenkachse und ein Außenprofil mit wenigstens einer Rastfläche zur Anlage an die in Richtung des Auslasses vorgespannte Schiebehülse. Damit wird in günstiger Weise eine Stellungssicherung für die Öffnungsstellung und gegebenenfalls für die Schließstellung des Schwenkorgans in konstruktiv außerordentlich einfacher Weise erreicht.

Für den Anschluß an einen Stutzen, beispielsweise an den Anschluß eines Gasflaschenventils, mit Außenhalteprofil sind die Spannzangen an dem Gehäuse in günstiger Weise in radialer Richtung vorgespannt aufspreizbar gelagert und durch ein inneres Steuerflächenprofil der Schiebehülse von außen in formschlüssigen Eingriff mit dem Außenhalteprofil des Stutzens bringbar und dort sicher haltbar.

Für den Anschluß an einen Stutzen bzw. an ein Gasflaschenventilanschluß mit einem Innenhalteprofil sieht die erfindungsgemäße Lösung des Schnellanschlusses vorteilhaft vor, daß die Spannzangen an dem Gehäuse in radialer Richtung vorgespannt einspreizbar gelagert und mittels eines äußeren an einem Dichtkolbenfortsatz gebildeten Steuerflächenprofils in Eingriff mit dem Innenhalteprofil bringbar und dort sicher haltbar sind, wobei die Schiebehülse zusätzlich eine in Richtung des Auslasses teleskopierbare vorgespannte Dichthülse aufweist.

Weitere Einzelheiten und Vorteile der Erfindung sind dem anschließenden Beschreibungsteil zu entnehmen, in dem zwei bevorzugte Ausführungsbeispiele der Erfindung unter Bezugnahme auf die beigefügten Zeichnungen näher erläutert werden.

Es zeigen:
- Fig. 1: eine Seitenansicht eines ersten Ausführungsbeispiels eines erfindungsgemäßen Schnellanschlusses für einen Stutzen mit einem Außeneingriffsprofil, wobei die obere Hälfte geschnitten ist und sich der Schnellanschluß in seiner Anschlußstellung befindet;
- Fig. 2: eine Draufsicht auf den in Fig. 1 gezeigten Schnellanschluß mit einem weggebrochenen Abschnitt im Bereich der Anlenkung des Schwenkorgans;
- Fig. 3: eine Seitenansicht ähnlich Fig. 1, jedoch in der Öffnungsstellung des Schnellanschlusses;
- Fig. 4: eine Darstellung des Schnellanschlusses ähnlich Fig. 1, jedoch in Anschlußstellung an ein Gasflaschenventil, wobei die obere Hälfte des Anschlußbereiches zur Darstellung der Anschlußstellung und der Dichtverhältnisse weggebrochen ist und der Anlenkungsbereich des Schwenkbügels zur Erläuterung des Eingriffs von Steuerscheibe und Schiebehülseausnehmung geschnitten ist;
- Fig. 5: eine Seitenansicht ähnlich Fig. 1, jedoch für einen modifizierten Schnellanschluß, der für den Anschluß an einen Stutzen, insbesondere ein Gasflaschenventil mit Innengewinde bzw. einem inneren Eingriffsprofil vorgesehen ist;
- Fig. 6: eine Draufsicht auf den Schnellanschluß gemäß Fig. 5;
- Fig. 7: eine Seitenansicht gemäß Fig. 5, jedoch in der Öffnungsstellung des Schwenkorgans; und
- Fig. 8: eine Seitenansicht zur Darstellung des Schnellanschlusses gemäß Fig. 5 in einer Anschlußstellung an einem Gasflaschenventil mit Innengewinde.

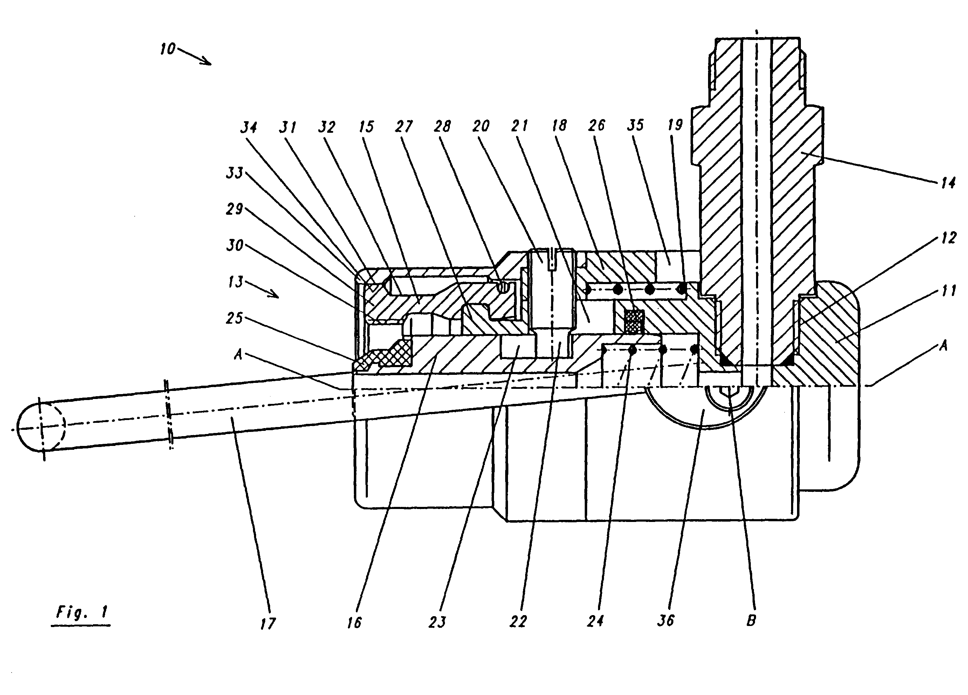

In Fig. 1 ist ein erstes Ausführungsbeispiel eines Schnellanschlusses 10 gemäß der Erfindung in der Anschlußstellung gezeigt, wobei ein Anschlußstutzen bzw. ein Gasflaschenventil weggelassen ist. Der Schnellanschluß 10 besteht aus einem Gehäuse 11 mit einem Einlaß 12 und einem Auslaß 13 für ein durch das Innere des Gehäuses 11 zu übertragendes Medium, beispielsweise Gas. Der Einlaß 12 ist mit einem Innengewinde versehen, in das ein Anschlußadapter 14 abgedichtet eingeschraubt ist, an den in nicht dargestellter Weise ein Rohr oder ein Schlauch angeschlossen ist, das oder der das Medium, in diesem Falle Gas, von einer Gasquelle heranführt. Der Adapter 14 ist senkrecht zur Längsachse des Gehäuses 11 in dieses eingeschraubt, wobei der damit verwirklichte Seiteneintritt in Fig. 1 auch nach unten statt nach oben oder an der dem Auslaß 13 entgegengesetzten Seite des Gehäuses 11 erfolgen kann. Dies gilt auch für das später noch zu beschreibende zweite Ausführungsbeispiel.

Im Bereich des Auslasses 13 ist eine Schnellanschlußvorrichtung vorgesehen, die aus Spannzangen 15, einem in dem Gehäuse 11 gleitend veschiebbaren hohlen Dichtkolben 16 und einer Betätigungseinrichtung 17 in Form eines Schwenkbügels besteht. Eine Schiebehülse 18 ist an der zylindrischen Außenseite des Gehäuses 11 geführt und mit einer schwachen Feder 19 in Richtung des Auslasses 13 vorgespannt.

In die Schiebehülse 18 ist ein Schraubbolzen 20 eingeschraubt, der das Gehäuse 11 in einem passenden Langloch 21 durchtritt, das parallel zur Längsachse A-A des Gehäuses 11 orientiert ist. Der Schraubbolzen 20 ragt mit einem im Durchmesser verringerten Endabschnitt 22 in eine Nut 23, die parallel zur Langsachse A-A des Gehäuses 11 orientiert in dem Dichtkolben 16 eingeformt ist. Der Dichtkolben 16 ist mit einer Feder 24 in Richtung des Auslasses 13 vorgespannt und besitzt an seinem vorderen Ende eine Ansatzdichtung 25 für die dichtende Anlage an einem in Fig. 1 nicht dargestellten Stutzen. Der hohle Dichtkolben 16 ist im Bereich seines anderen Endes mittels radialer Dichtungen 26 gegen das Gehäuse 11 abgedichtet und in einem zylindrischen Abschnitt desselben verschiebbar gelagert.

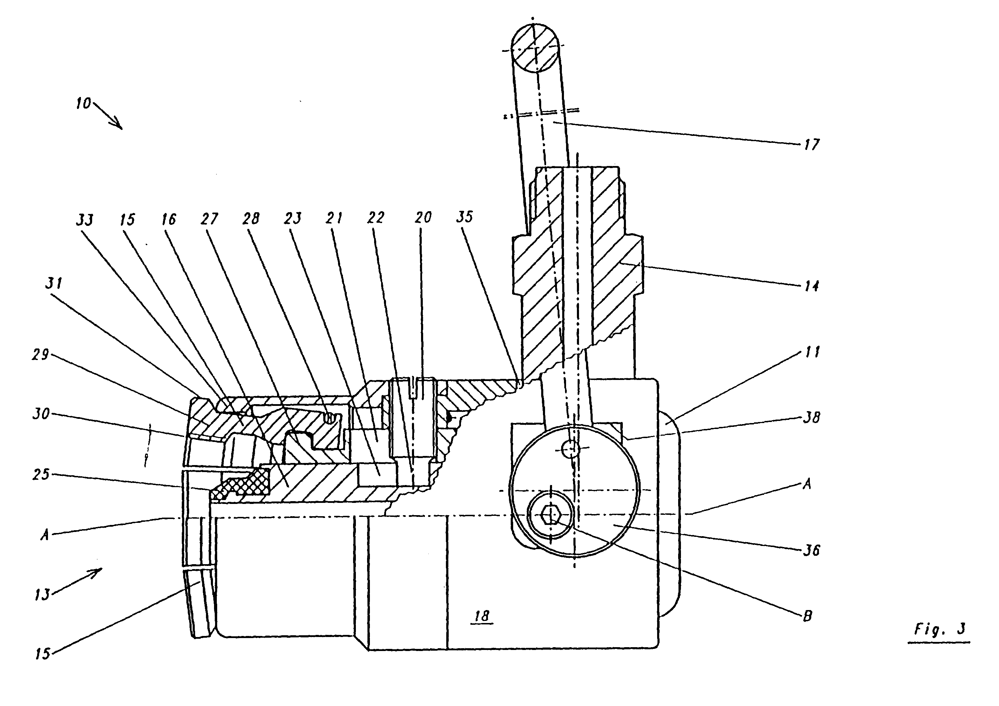

Wenigstens drei Spannzangen 15 sind radial in gleichmäßigen Abständen voneinander über den zylinderförmigen Endabschnitt 27 des Gehäuses 11 verteilt, dort in radialer Richtung bewegbar gelagert und mittels einer Druckfeder 28 in Aufspreizrichtung vorgespannt. Der vordere Abschnitt 29 jeder Spannzange 15 besitzt ein nach innen orientiertes Eingriffsprofil 30, im vorliegenden Fall ein Innengewinde, für den formschlüssigen Angriff an ein externes und komplementäres Eingriffsprofil, in diesem Fall einem Außenprofil. Der vordere Abschnitt 29 weist an seiner Außenseite eine Steuerfläche 31 auf, an die sich ein eingeformter Abschnitt 32 anschließt. Die Schiebehülse 18 besitzt an ihrem vorderen Ende 33, also im Bereich des Auslasses 13, eine erhabene teilzylindrische Steuerfläche 34, die im Zusammenwirken mit der Steuerfläche 31 dazu dient, die Spannzangen 15 in ihrer Anschlußstellung zu behalten. Nach einer Zurückbewegung der Schiebehülse 15, die hierzu im Bereich des Adapters eine passende Ausnehmung 35 aufweist, wird die Sicherung der Anschlußstellung seitens der Steuerfläche 34 beseitigt, und die Spannzangen 15 können, wie in Fig. 3 gezeigt, unter Wirkung der Druckfeder 28 aufspreizen, wobei der eingeformte Abschnitt 32 zur Anlage an die Steuerfläche 34 gelangt.

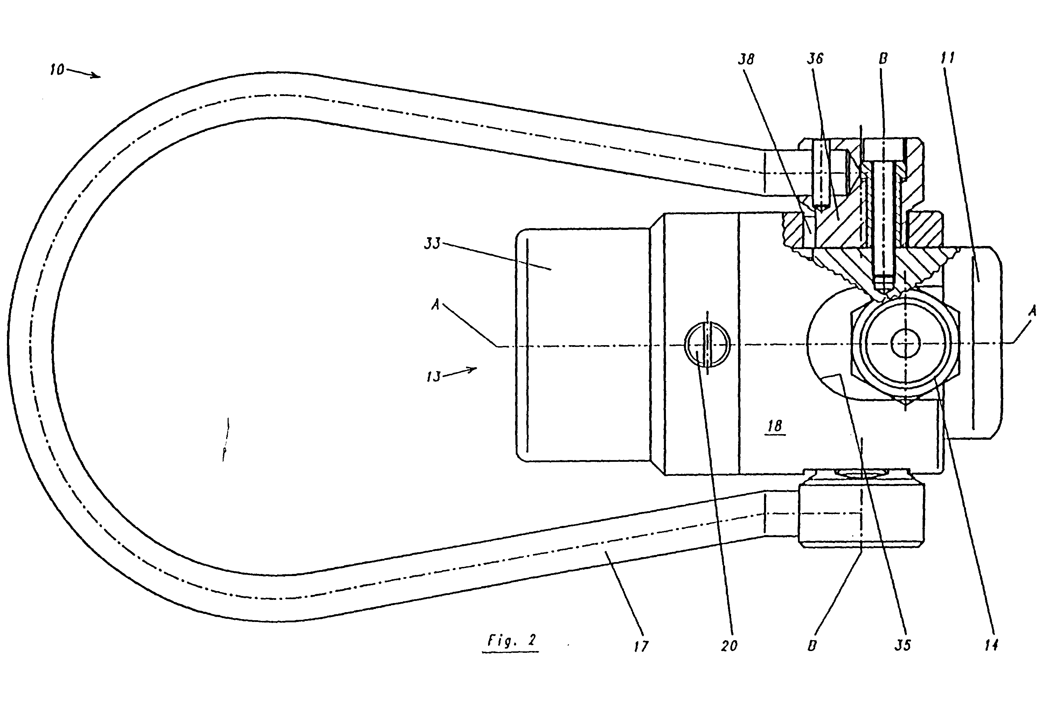

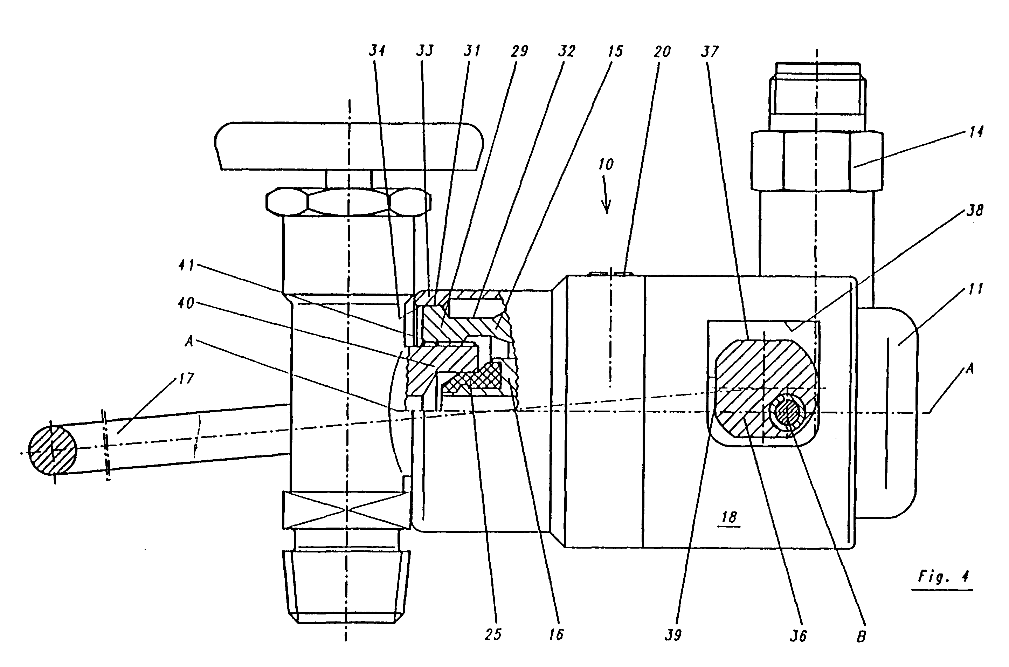

Für das Verschieben der Schiebehülse 18 weist die Betätigungseinrichtung einen Schwenkbügel 17 auf, der wie in Fig. 2 gezeigt, an gegenüberliegenden Seiten des Gehäuses 11 in der Höhe der Längsachse A-A schwenkbar gelagert ist und sich von dem Gehäuse nach außen bis zu einer verbindenden Kreisbogenhälfte erweitert. Die Gestaltung des Schwenkbügels ist derart bemessen, daß sie den jeweiligen Anwendungsfällen des Schnellanschlusses leicht angepaßt werden kann. Bei dem dargestellten Ausführungsbeispiel dient die Form des Schwenkbügels 17 dazu, ein Verschwenken über einen Gasflaschenventilanschluß, vgl. Fig. 4, zu ermöglichen.

Der Schwenkbügel 17 ist in Fig. 3 in einer Öffnungsstellung gezeigt, in der er etwa senkrecht zur Längsachse A-A des Gehäuses 11 orientiert ist. Aus dieser Öffnungsstellung ist der Schwenkbügel 17 über eine Ebene hinaus in die in den Fig. 1, 2 und 4 dargestellte Anschlußstellung schwenkbar, wobei die Durchtrittsebene durch die Längsachse A-A des Gehäuses 11 und die sich mit dieser senkrecht kreuzenden Schwenkachse B-B des Schwenkbügels definiert ist. Aufgrund dieser Schwenkbügelorientierung in der Anschlußstellung liegt das äußere Ende des Schwenkbügels 17 unterhalb der zuvor definierten Ebene und bildet mit dieser einen spitzen Winkel. Diese Lagezuordnung über die ebenenparallele Orientierung hinaus bedingt eine zusätzliche sichernde Funktion, zu der auch das Eigengewicht des Schwenkbügels 17 beiträgt.

Im Anlenkungsbereich des Schwenkbügels 17 ist an jeder Seite eine Steuerscheibe 36 mit dem Schwenkbügel 17 verbunden, die exzentrisch zu der Schwenkachse B-B gelagert ist und, wie Fig. 4 entnehmbar, ein Außenprofil mit einer Rastfläche 37 für die Lagesicherung des Schwenkbügels in der Öffnungsstellung versehen ist. Die Steuerscheibe 36 greift in eine Ausnehmung 38 ein, die in der Schiebehülse 18 gebildet ist. Die Gestaltung der Ausnehmung 38 ist so bemessen, daß die Steuerscheibe sich in dieser drehen kann und eine sichernde Anlage in der Öffnungsstellung und in der Anschlußstellung primär unter der Andruckwirkung der Feder 19 ermöglicht. Darüberhinaus weist die Steuerscheibe 36 eine weitere Rastfläche 39 auf, durch die eine geringfügige Rückwärtsbewegung der Schiebehülse 18 derart begrenzt wird, daß stets die Steuerfläche 34 der Schiebehülse 18 die Steuerfläche 31 der Spannzangen 15 zur Sicherung des Eingriffs in der Anschlußstellung hält.

Die Wirkungsweise des Schnellanschlusses 10 wird nun nachfolgend unter Bezugnahme auf die Fig. 3 und 4 erläutert. In der in Fig. 3 gezeigten Öffnungsstellung befindet sich der Schnellanschluß 10 in Bereitschaft zum Ankuppeln an einen Stutzen mit komplementärem formschlüssigen Eingriffsprofil. Der Schwenkbügel 17 ist hochgeschwenkt, und demgemäß befindet sich die Schiebehülse 18 aufgrund der Anlage der exzentrischen Steuerscheibe 13 mit der Rastfläche 37 an einer Seitenwand der Steuerscheibenausnehmung 38 in der hintersten zurückgezogenen Stellung. Die Spannzangen 15 sind radial aufgespreizt. Der Schraubbolzen 20 befindet sich in dem Langloch 21 an der hintersten Stellung, und der Dichtkolben 16 liegt unter Wirkung der Druckfeder 24 mit dem hinteren Ende der Nut 23 (in den Fig. bedeutet bezogen auf das Gehäuse 11 die Auslaßseite 13 vorn) in Anlage an dem vorderen Endabschnitt 22 des Schraubbolzens 20.

Wenn der Schnellanschluß 10 in seiner öffnungsstellung nunmehr einen Stutzen bzw. gemäß Fig. 4 an einen Gewindeanschluß 40 mit Außengewinde 41 angesetzt wird, schiebt der Gewindeanschluß 40 den Dichtkolben 16 in das Gehäuse 11, bis das Profil 30 der Spannzangen 15 sich über dem Gewinde 41 befindet und in dieses zur sicheren Anlage eingreifen kann. Der Dichtkolben 16 kann dabei maximal soweit in das Gehäuse 11 eingeschoben werden, bis das vordere Ende der Nut 23 zur Anlage an den Endabschnitt 22 des Schraubbolzens 20 gelangt. Die richtige Ansatzstellung kann dabei von dem Benutzer auch ohne weiteres dadurch kontrolliert werden, daß er einen Blick durch eine Lücke zwischen den aufgespreizten Spannzangen 15 wirft.

Der Benutzer hält nun den Schnellanschluß 10 in dieser zuvor beschriebenen Ansatzstellung und schwingt den Bügel 17 bis in die in Fig. 4 gezeigte Stellung über das Gasflaschenventil hinweg. Bei dieser Schwenkbewegung des Bügels 17 wird durch den steuernden Eingriff der Steuerscheibe 16 in der Ausnehmung 38 der Schiebehülse 18 nach vorn, d. h. in Richtung des Auslasses 13 gedrückt, wobei sie mit Ihrem vorderen Abschnitt 33 und der Steuerfläche 34 die Spannzangen 15 einspreizend beaufschlagt, bis die in Fig. 4 gezeigte Eingriffsstellung erreicht ist, bei der das Innengewinde 30 der Spannzangen 15 in das Außengewinde 41 des Gasflaschenventilanschlusses 40 angreift und in dieser Anschlußstellung von der Schiebehülse 18 gesichert gehalten wird. In dieser Anschlußstellung liegt der untere Abschnitt 22 des Gewindebolzens 20 am vorderen Ende der Nut 23 des Dichtkolbens 16 und gewährleistet sicher dichtende Andruckverhältnisse über die Ansatzdichtung 15 mit dem Gasflaschenventilanschluß 40, wie in Fig. 4 gezeigt.

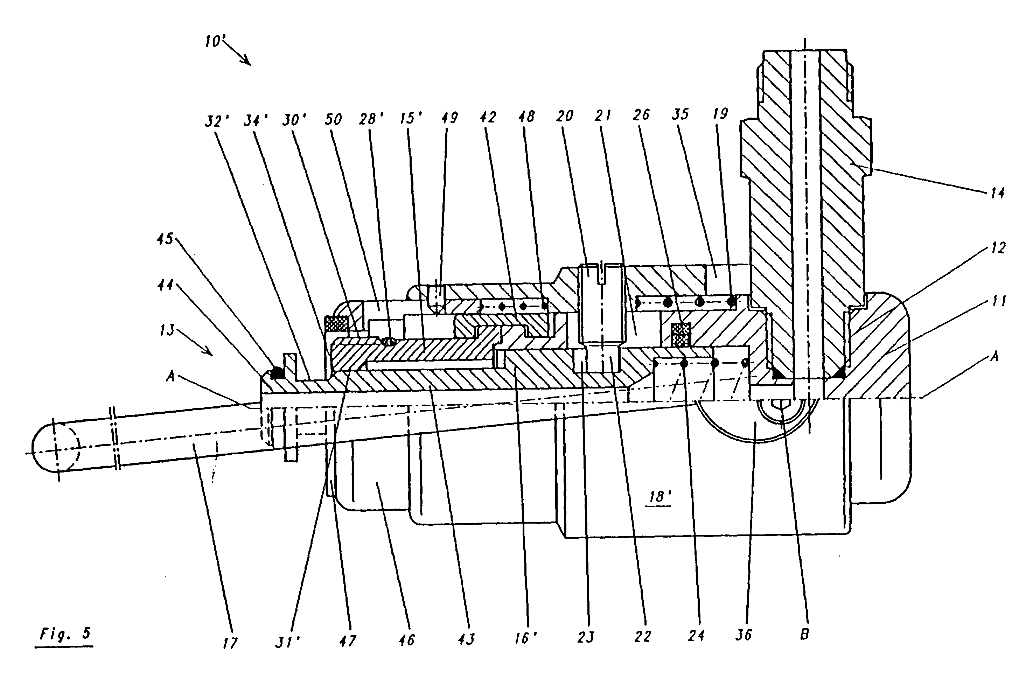

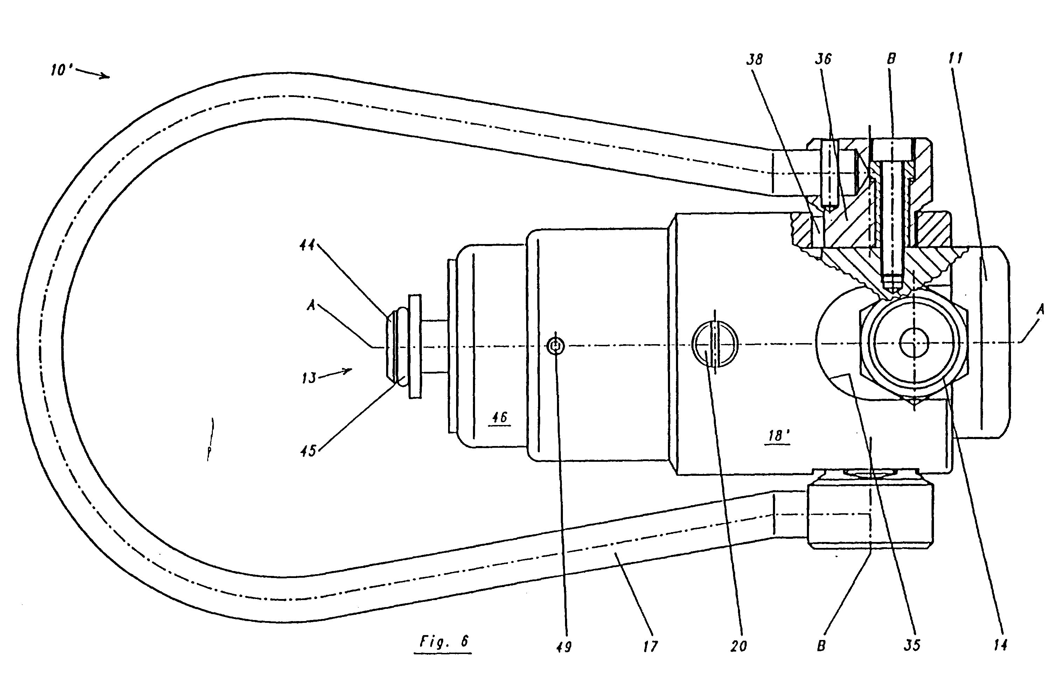

In den Fig. 5 bis 8 ist ein zweites Ausführungsbeispiel eines Schnellanschlusses 10' gezeigt, bei dem zur Vereinfachung gleiche Teile dieselben Bezugszeichen und bei geringer Modifikation derselben Bezugszeichen mit ' aufweisen.

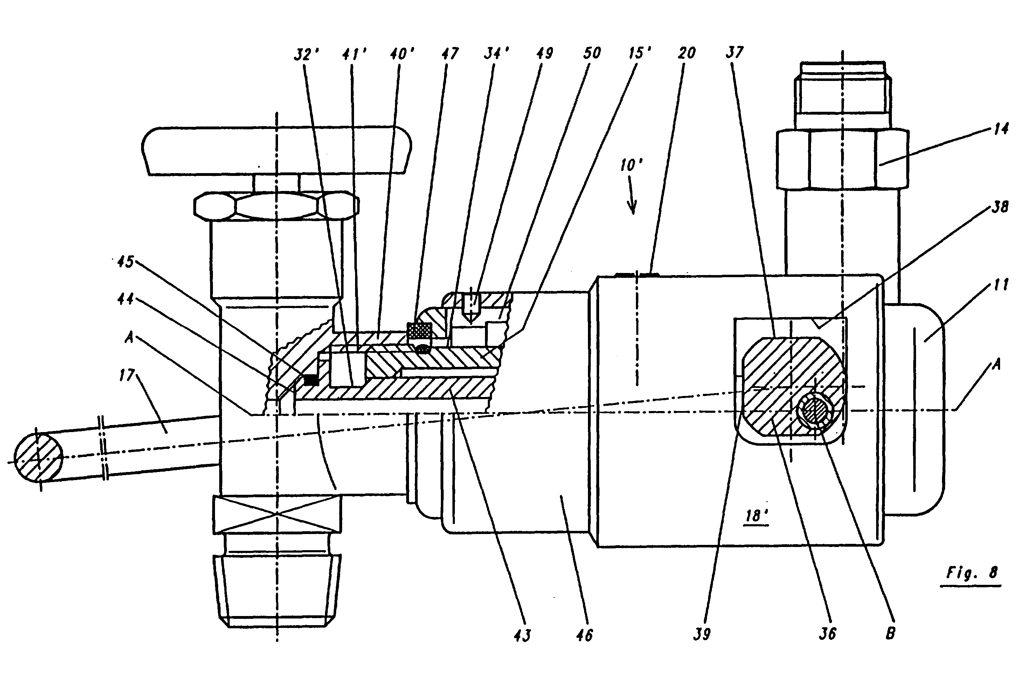

Der Schnellanschluß 10' ist für den Anschluß an einen Stutzen mit einem Innenhalteprofil vorgesehen, im vorliegenden Fall für einen Gasflaschenventilanschluß 40' mit einem Innengewinde 41', vgl. Fig. 8. Abweichungen gegenüber dem ersten Ausführungsbeispiel sind daher im Bereich der Schnellanschlußvorrichtung vorgesehen, bei der Spannzangen 15' an dem vorderen Ende des Gehäuses 11 in radialer Richtung mittels einer Druckfeder 28' vorgespannt einspreizbar sind und an ihrem vorderen Ende ein radial nach außen weisendes Eingriffsprofil 30' und eine gegenüber innenliegende Steuerfläche 31' aufweisen. Die Spannzangen 15 sind mittels einer Klammerhülse 42 mit dem vorderen Ende des Gehäuses 11 bewegbar verbunden.

Beaufschlagt wird die Steuerfläche 31' der Spannzangen 15' durch eine Steuerfläche 34', die an einem Fortsatz 43 des Dichtkolbens 16' gebildet ist und für den einspreizenden Eintritt der Steuerflächen 31' in der Öffnungsstellung des Schnellanschlusses 10' einen eingeformten Abschnitt 32' aufweist. Das vordere Ende des Fortsatzes 43 des Dichtkolbens 16 mündet in einem Ansatzstück 44 mit einer radialen Dichtung 45, das, wie Fig. 8 zu entnehmen ist, zum dichtenden Ansatz in dem Gasflaschenventilanschluß 40' vorgesehen ist.

Die Schiebehülse 18', die ebenfalls über den Schraubbolzen 20 mit dem Dichtkolben 16' verbunden ist, weist an ihrem vorderen Ende abweichend vom ersten Ausführungsbeispiel kein Steuerprofil für die Spannzangen 15', sondern eine teleskopierbare Dichthülse 46 mit stirnseitiger Anlagedichtung 47 auf. Diese Dichthülse 46 ist mittels einer Feder 48 in Austrittsrichtung nach vorn vorgespannt, wie Fig. 5 zu entnehmen ist, und besitzt als Verdrehsicherung gegenüber der Schiebehülse 18' einen Längsschlitz 50, der parallel zur Längsachse A-A verläuft, in den ein in der Schiebehülse 18' befestigter Stift 19 eingreift.

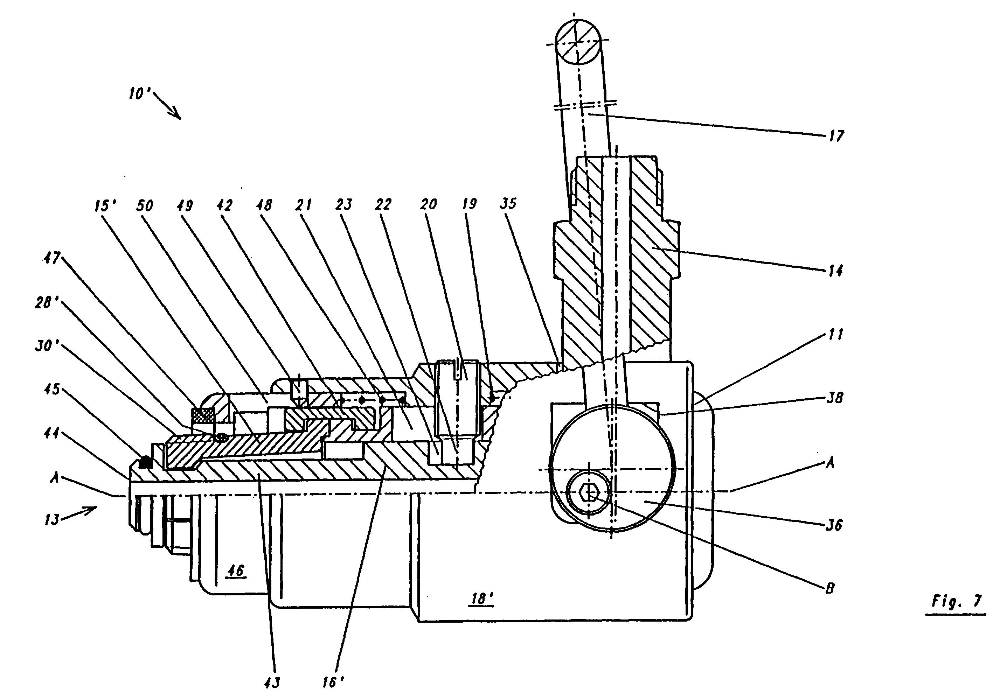

Die Handhabung des Schnellanschlusses 10' entspricht im wesentlichen der des Schnellanschlusses 10, wobei der Schnellanschluß 10' in den Gasventilanschluß 40' mit eingespreizten Spannzangen 15' soweit eingesetzt wird, bis die Stirndichtung 47 dichtend anliegt. Beim Verschwenken des Bügels 17 bewegt sich dann das Ansatzstück 44 aus der in Fig. 7 gezeigten Stellung in den Gasflaschenfüllanschluß 40 bis zur dichtenden Anlage an einem Dichtsitz hinein, wobei die Spannzangen durch die Steuerfläche 34' mit ihrem Außengewinde 30' in Eingriff mit dem Innengewinde 41' gelangen und sicher gehalten werden.

Bei beiden Ausführungsformen des Schnellanschlusses 10 bzw. 10' wird somit mit einer leichten Verschwenkbewegung um etwa 90° einfach und zuverlässig eine schnelle und sichere Kupplung zur Übertragung von gasförmigen und/oder flüssigen Medien, insbesondere zum Füllen von Gasflaschen, erreicht.

## Patentansprüche

1. Schnellanschluß für die Übertragung von gasförmigen und/oder flüssigen Medien, insbesondere zum Füllen von Gasflaschen, bestehend aus:
einem Gehäuse (11) mit einem Einlaß (12) und einem Auslaß (13) für das zu übertragende Medium, und aus
einer im Bereich des Auslasses (13) vorgesehenen Schnellanschlußvorrichtung mit Spannzangen (15, 15'), die formschlüssig mit einem externen komplementären Eingriffsprofil (40, 40') verbindbar sind, mit einem in dem Gehäuse (11) gleitend verschiebbaren hohlen Dichtkolben (16, 16') und mit einer mit dem Dichtkolben (16, 16') über eine Schiebehülse (18, 18') verbundene Betätigungseinrichtung (17) für den Eingriff der Spannzangen (15, 15'), wobei die Betätigungseinrichtung ein am Gehäuse (11) gelagertes Schwenkorgan (17) mit einer Steuerscheibe (36) aufweist, dadurch gekennzeichnet, daß die Steuerscheibe zur Bewegungsübertragung an die Schiebehülse (18, 18') direkt angreift.

2. Schnellanschluß nach Anspruch 1, dadurch gekennzeichnet, daß die Schiebehülse (18, 18') mit dem Dichtkolben (16, 16') relativ bewegbar verbunden ist.

3. Schnellanschluß nach Anspruch 1 oder 2, dadurch gekennzeichnet, daß für die Verbindung zwischen der Schiebehülse (18, 18') und dem Dichtkolben (16, 16') wenigstens ein Bolzen (20) vorgesehen ist.

4. Schnellanschluß nach Anspruch 3, dadurch gekennzeichnet, daß jeder Bolzen (30) an dem Dichtkolben (16, 16') in eine in Kolbenbewegungsrichtung orientierte Nut (23) eintritt.

5. Schnellanschluß nach Anspruch 3 oder 4, dadurch gekennzeichnet, daß die Schiebehülse (18, 18') das Gehäuse (11) umgibt, wobei jeder Bolzen (20) zur Verbindung mit dem Dichtkolben (16, 16') das Gehäuse 11 in einem in Kolbenbewegungsrichtung orientierten Langloch (21) durchtritt.

6. Schnellanschluß nach Anspruch 1, dadurch gekennzeichnet, daß das Schwenkorgan (17) als Schwenkhebel ausgebildet ist.

7. Schnellanschluß nach Anspruch 1, dadurch gekennzeichnet, daß das Schwenkorgan (17) die Form eines Bügels aufweist, der über den Bereich des Auslasses (13) schwenkbar ist.

8. Schnellanschluß nach Anspruch 7, dadurch gekennzeichnet, daß der Schwenkbügel (17) an dem Gehäuse (11) im Bereich der Gehäuselängsachse (A-A) gelagert (B-B) und aus einer Öffnungsstellung, die etwa senkrecht zur Gehäuselängsachse (A-A) orientiert ist, in einer Anschlußstellung jenseits einer Ebene schwenkbar ist, in der die Gehäuselängsachse (A-A) und die Schwenkachse (B-B) liegen.

9. Schnellanschluß nach Anspruch 1, dadurch gekennzeichnet, daß die Steuerscheibe (36) in einer Ausnehmung (38) der Schiebehülse (18, 18') an diese angreift.

10. Schnellanschluß nach Anspruch 1 oder 9, dadurch gekennzeichnet, daß die Steuerscheibe (36) eine exzentrische Schwenkachse und ein Außenprofil mit wenigstens einer Rastfläche (37) zur Anlage an die in Richtung des Auslasses (13) vorgespannte Schiebehülse (18, 18') aufweist.

11. Schnellanschluß nach einem der vorangehenden Ansprüche, dadurch gekennzeichnet, daß für den Anschluß an einen Stutzen (40) mit Außenhalteprofil (41) die Spannzangen (15) an dem Gehäuse (11) in radialer Richtung vorgespannt aufspreizbar gelagert und durch eine Steuerfläche (34) der Schiebehülse (18) von außen in formschlüssigen haltenden Eingriff mit dem Außenhalteprofil (41) bringbar sind.

12. Schnellanschluß nach einem der Ansprüche 1 bis 10, dadurch gekennzeichnet, daß für den Anschluß an einen Stutzen (40') mit Innenhalteprofil (41) die Spannzangen (15') an dem Gehäuse (11) in radialer Richtung vorgespannt einspreizbar gelagert und mittels eines äußeren an einem Fortsatz (43) des Dichtkolbens (16') gebildeten Steuerflächenprofils (34') in haltenden Eingriff mit dem Innenhalteprofil (41') bringbar sind, wobei die Schiebehülsen (18') eine in Richtung des Auslasses (13) teleskopierbare vorgespannte Dichthülse (46) aufweist.

## Claims

1. Quick-connect fitting for transferring gaseous and/or liquid media, in particular for filling gas bottles, consisting of:
a housing (11) with an inlet (12) and an outlet (13) for the medium to be transferred, and
a quick-connect device arranged in the area of the outlet (13) with clamping tongs (15, 15') that can be interlocked with an external complementary gripping profile (40, 40'),
a hollow sealing piston (16, 16') that can glide in the housing (11), and an actuating device (17) for applying the clamping tongs (15, 15'), which is linked to the sealing piston (16, 16') by means of a sliding sleeve (18, 18'),
wherein the actuating device has a pivoting member (17) mounted on the housing (11) and having a disk cam (36),
characterized in that
the disk cam (36) directly engages the sliding sleeve (18, 18') to make it move.

2. Quick-connect fitting according to claim 1, characterized in that the sliding sleeve (18, 18') is linked to the sealing piston (16, 16') in a relatively movable manner.

3. Quick-connect fitting according to claim 1 or 2,
characterized in that at least one bolt (20) is provided for linking the sliding sleeve (18, 18') to the sealing piston (16, 16').

4. Quick-connect fitting according to claim 3, characterized in that each bolt (20) at the sealing piston (16, 16') passes through a groove (23), which is aligned in the direction of the piston movement.

5. Quick-connect fitting according to claim 3 or 4,
characterized in that the sliding sleeve (18, 18') surrounds the housing (11), whereby for the connection with the sealing piston (16, 16'), each bolt (20) passes through the housing (11) in a slotted hole (21) which is aligned in the direction of the piston movement.

6. Quick-connect fitting according to claim 1, characterized in that the pivoting member (17) is constructed as a pivoting lever.

7. Quick-connect fitting according to claim 1, characterized in that the pivoting member (17) has the shape of a lever which can be swivelled over the area of the outlet (13).

8. Quick-connect fitting according to claim 7, characterized in that the pivoting lever (17) at the housing (11) is supported (B-B) in the area of the longitudinal axis of the housing (A-A) and that from an opened position, which is aligned approximately vertical to the longitudinal axis of the housing (A-A), the lever can be swivelled into a connected position beyond a plane in which lie the longitudinal axis of the housing (A-A) and the swivel axis (B-B).

9. Quick-connect fitting according to claim 1, characterized in that the disk cam (36) engages the sliding sleeve (18, 18') in a recess (38) of the sliding sleeve (18, 18').

10. Quick-connect fitting according to claim 1 or 9, characterized in that the disk cam (36) has an eccentric swivel axis and an external profile with at least one cam top (37) for contact with the sliding sleeve (18, 18') prestressed in the direction of the outlet (13).

11. Quick-connect fitting according to one of the previous claims, characterized in that for a connection to a nipple (40) with an external support profile (41), the prestressed, expandable clamping tongs (15) are supported at the housing (11) in a radial direction and in that they can be interlocked with the external profile (41) from the outside by means of a control surface (34) of the sliding sleeve (18).

12. Quick-connect fitting according to one of the claims 1 through 10, characterized in that for the connection to a nipple (40') with an internal support profile (41'), the prestressed, expandable clamping tongs (15') are supported at the housing (11) in a radial direction and in that they interlock with the internal support profile (41') by means of an external control surface profile (34') which is constructed at an extension (43) of the sealing piston (16'); the sliding sleeve (18') has a sealing sleeve (46) that can be telescoped and prestressed in the direction of the outlet (46).

## Revendications

1. Raccord rapide pour le transfert d'agents gazeux et/ou liquides, notamment en vue du remplissage de bouteilles à gaz, comprenant :
un carter (11) présentant une admission (12) et une sortie (13) pour le fluide devant être transféré, et
un dispositif de raccordement rapide prévu dans la région de la sortie (13) et comportant des mors de serrage (15, 15') pouvant être reliés, par concordance de formes, à un profil (40, 40') de venue en prise, extérieur et complémentaire ; un piston creux d'étanchement (16, 16'), doué de mobilité glissante dans le carter (11) ; et un système d'actionnement (17) relié au piston d'étanchement (16, 16') par l'intermédiaire d'une douille coulissante (18, 18'), en vue de la venue en prise des mors de serrage (15, 15'), le système d'actionnement présentant un organe pivotant (17) monté sur le carter (11) et associé à un disque de commande (36), caractérisé par le fait que le disque de commande vient directement en prise avec la douille coulissante (18, 18'), pour la transmission de mouvements.

2. Raccord rapide selon la revendication 1, caractérisé par le fait que la douille coulissante (18, 18') est reliée au piston d'étanchement (16, 16') avec mobilité relative.

3. Raccord rapide selon la revendication 1 ou 2, caractérisé par le fait qu'au moins un boulon (20) est prévu pour la liaison entre la douille coulissante (18, 18') et le piston d'étanchement (16, 16').

4. Raccord rapide selon la revendication 3, caractérisé par le fait que chaque boulon (20) pénètre, sur le piston d'étanchement (16, 16'), dans une gorge (23) orientée dans la direction du mouvement dudit piston.

5. Raccord rapide selon la revendication 3 ou 4, caractérisé par le fait que la douille coulissante (18, 18') entoure le carter (11), chaque boulon (20) traversant le carter (11), en vue de la liaison avec le piston d'étanchement (16, 16'), dans un trou oblong (21) orienté dans la direction du mouvement dudit piston.

6. Raccord rapide selon la revendication 1, caractérisé par le fait que l'organe pivotant (17) est conçu sous la forme d'un levier pivotant.

7. Raccord rapide selon la revendication 1, caractérisé par le fait que l'organe pivotant (17) revêt la forme d'un étrier pouvant pivoter sur la région de la sortie (13).

8. Raccord rapide selon la revendication 7, caractérisé par le fait que l'étrier pivotant (17) est monté (B-B), sur le carter (11), dans la région de l'axe longitudinal (A-A) dudit carter, et peut pivoter à partir d'une position d'ouverture, orientée à peu près perpendiculairement à l'axe longitudinal (A-A) du carter, jusqu'à une position de raccordement au-delà d'un plan dans lequel l'axe longitudinal (A-A) du carter et l'axe de pivotement (B-B) sont situés.

9. Raccord rapide selon la revendication 1, caractérisé par le fait que le disque de commande (36) vient en prise, sur la douille coulissante (18, 18'), dans un évidement (38) de cette dernière.

10. Raccord rapide selon la revendication 1 ou 9, caractérisé par le fait que le disque de commande (36) présente un axe excentré de pivotement et un profil externe comportant au moins une surface d'encliquetage (37), afin de venir s'appliquer contre la douille coulissante (18, 18') préchargée en direction de la sortie (13).

11. Raccord rapide selon l'une des revendications précédentes, caractérisé par le fait que, en vue du rattachement à un manchon (40) muni d'un profil extérieur de retenue (41), les mors de serrage (15) sont montés sur le carter (11) avec faculté d'ouverture par écartement, en étant préchargés dans le sens radial, et peuvent être mis en prise de retenue par concordance de formes depuis l'extérieur, avec le profil extérieur de retenue (41), par l'intermédiaire d'une surface de commande (34) de la douille coulissante (18).

12. Raccord rapide selon l'une des revendications 1 à 10, caractérisé par le fait que, en vue du rattachement à un manchon (40') muni d'un profil extérieur de retenue (41') les mors de serrage (15') sont montés sur le carter (11) avec faculté de resserrement, en étant préchargés dans le sens radial, et peuvent être mis en prise de retenue, avec le profil intérieur de retenue (41'), au moyen d'un profil extérieur de surface de commande (34') ménagé sur un appendice (43) du piston d'étanchement (16'), la douille coulissante (18') présentant une douille préchargée d'étanchement (46) télescopique dans la direction de la sortie (13).
